# FASCICULE DE BREVET EUROPEEN

(11) **EP 4 108 964 B1**
(45) Date de publication et mention de la délivrance du brevet: **31.01.2024**
(21) Numéro de dépôt: 22177988.7
(22) Date de dépôt: 09.06.2022
(51) Int. Cl.: F16K 15/06

(54) **VANNE INSERABLE ANTI-RETOUR POUR VEHICULE**
EINSETZBARES RÜCKSCHLAGVENTIL FÜR FAHRZEUGE
INSERTABLE CHECK VALVE FOR A VEHICLE

(30) Priorité: 25.06.2021 FR 2106840
(43) Date de publication de la demande: 28.12.2022
(73) Titulaire: HUTCHINSON, 75008 Paris (FR)
(72) Inventeur: VEGA, Jean Gabriel, 45700 PANNES (FR); CAMUS, Albert, 45200 MONTARGIS (FR); TANGUY, Thierry, 45490 COURTEMPIERRE (FR)
(74) Mandataire: Gevers & Orès

(56) Documents cités:
- US-A- 2 960 998
- US-A- 4 862 913
- US-A- 4 955 407
- US-A1- 2006 011 238
- US-A1- 2006 260 684

## Description

### Domaine technique de l'invention

La présente invention concerne une vanne insérable anti-retour pour un circuit de fluide, en particulier d'un véhicule.

### Arrière-plan technique

L'arrière-plan technique comprend notamment les documents US-A-4,862,913, US-A1-2006/260684, US-A1-2006/011238, US-A-2,960,998 et US-A-4,955,407.

Un véhicule, en particulier automobile, comprend plusieurs circuits de fluide qui sont équipés de dispositifs de raccordement fluidique et de vannes antiretours.

Il est connu d'associer une vanne anti-retour à un dispositif de raccordement fluidique, ce dispositif comportant par exemple un corps dans lequel est monté la vanne anti-retour. Le corps est destiné à être fixé sur une extrémité d'un premier tuyau et comprend une bride annulaire de fixation à une bride annulaire montée sur une extrémité d'un second tuyau.

Ce dispositif assure le raccordement fluidique des tuyaux, et peut comporter des joints pour assurer une étanchéité de ce raccordement.

La vanne anti-retour est configurée pour autoriser l'écoulement d'un fluide dans les tuyaux, dans une direction, et pour empêcher l'écoulement de ce fluide dans la direction opposée.

La présente invention propose un perfectionnement à la technologie existante, qui soit simple, efficace et économique.

### Résumé de l'invention

Selon un premier aspect, ne faisant pas partie de l'invention telle que revendiquée, il est décrit un dispositif de raccordement fluidique pour un circuit de fluide, en particulier d'un véhicule, ce dispositif comportant :
- un premier tuyau comportant un tronçon principal de diamètre interne D1 et un tronçon secondaire ayant au moins un diamètre interne D2 supérieur à D1, le tronçon secondaire étant situé à une extrémité du premier tuyau et relié au tronçon principal par un premier rétrécissement, ce premier tuyau étant réalisé dans un matériau plastiquement déformable et comportant une première collerette annulaire externe,
- un embout tubulaire comportant un tronçon d'extrémité de diamètre externe D3 qui est configuré pour être engagé suivant un axe A dans le tronçon secondaire du premier tuyau, cet embout comportant un épaulement cylindrique externe,
- une première bride montée autour du tronçon secondaire du premier tuyau et comportant un premier orifice traversé par ce tronçon secondaire, cette première bride étant configurée pour prendre appui axialement sur la première collerette,
- une seconde bride montée autour de l'embout et comportant un second orifice traversé par cet embout, cette seconde bride étant configurée pour prendre appui axialement sur l'épaulement cylindrique, les première et seconde brides étant configurées pour être serrées l'une contre l'autre dans un plan de liaison sensiblement perpendiculaire audit axe A afin de rapprocher la première collerette dudit épaulement cylindrique et de maintenir l'embout engagé dans le premier tuyau,
- au moins un élément de fixation des première et seconde brides l'une contre l'autre, et
- une vanne insérable anti-retour montée à l'intérieur dudit tronçon secondaire, et située axialement entre ledit premier rétrécissement et ledit tronçon d'extrémité.

Selon cet aspect non revendiqué, il est proposé le raccordement d'un premier tuyau à un embout tubulaire qui peut lui-même être un second tuyau, au moyen de brides. Ce dispositif est équipé d'une vanne anti-retour qui a la particularité d'être insérable, c'est-à-dire qu'elle forme un insert à l'intérieur du premier tuyau. Autrement dit, la vanne n'est pas intégré ou inséré dans un corps du dispositif qui est indépendant des tuyaux mais est au contraire directement inséré dans un des tuyaux. Pour cela, le premier tuyau a de préférence son diamètre interne qui est élargi pour pouvoir accueillir la vanne. La vanne est intercalée axialement entre le rétrécissement du premier tuyau et l'embout tubulaire (ou le second tuyau) et est ainsi empêché de sortie du premier tuyau.

Ce dispositif non revendiqué peut comprendre une ou plusieurs des caractéristiques suivantes, prises isolément les unes des autres ou en combinaison les unes avec les autres :
- la première collerette est située à une extrémité libre dudit tronçon secondaire ;
- un joint annulaire d'étanchéité est intercalé axialement et serré entre la première collerette et l'embout ;
   -- la première collerette est obtenue par déformation plastique de l'extrémité libre dudit tronçon secondaire ;
- ledit embout est rapporté et fixé à une extrémité d'un second tuyau ;
- ladite seconde bride est sertie sur ledit embout ;
- ledit embout fait partie intégrante d'un second tuyau qui est réalisé dans un matériau plastiquement déformable ;
- ledit épaulement cylindrique est formé par une seconde collerette annulaire externe située à distance axiale d'une extrémité libre dudit tronçon d'extrémité ;
- ladite seconde collerette est obtenue par déformation plastique du second tuyau, cette collerette étant formée par une boursouflure annulaire externe dont des parois annulaires en regard sont serrées axialement l'une contre l'autre de sorte que la seconde collerette ait une épaisseur axiale supérieure à une épaisseur radiale du second tuyau ;
- ledit tronçon d'extrémité comprend au moins une gorge annulaire externe de logement d'un joint annulaire d'étanchéité configuré pour coopérer avec une surface annulaire interne dudit tronçon secondaire ;
- ladite au moins une gorge est obtenue par déformation plastique du tronçon d'extrémité ;
- ledit au moins un élément de fixation comprend une vis ou un boulon qui traverse des trous en regard desdites première et seconde brides ;
- ledit tronçon secondaire comprend une première portion de diamètre interne D2' supérieur à D1, et une seconde portion de diamètre interne D2 située entre le tronçon principal et ladite première portion, D2 étant supérieur à D1 et inférieur à D2' ;
- lesdites première et seconde portions sont reliées ensemble par un second rétrécissement du premier tuyau ;
- la vanne est montée à l'intérieur de la seconde portion et le tronçon d'extrémité est monté à l'intérieur de la première portion ;

-- chacune des brides est monobloc ;
-- le premier tuyau, et/ou le seconde tuyau, et/ou l'embout, est/sont réalisé(s) en métal et par exemple en aluminium.

Un autre aspect non revendiqué concerne également un circuit de fluide pour un véhicule, comportant au moins un dispositif de raccordement fluidique tel que décrit ci-dessus.

Un autre aspect non revendiqué concerne également un véhicule, comportant au moins un dispositif ou un circuit de fluide tel que décrit ci-dessus.

L'invention concerne une vanne insérable anti-retour pour un circuit de fluide, en particulier d'un véhicule, cette vanne étant configurée pour être insérée dans un tuyau et comportant :
- un corps tubulaire ayant un axe principal A et comportant une surface cylindrique externe configurée pour être entourée par une surface cylindrique interne du tuyau, ce corps comportant un rebord annulaire interne et un siège annulaire interne,
- une bague montée au moins en partie dans ou sur ledit corps et comportant des guides s'étendant en direction radiale par rapport audit axe A,
- un piston monté dans ledit corps et comportant une tête portant un premier joint annulaire d'étanchéité configuré pour venir en appui sur ledit siège, le piston comportant un premier côté et des pattes s'étendant axialement depuis ce premier côté et configurées pour coopérer par glissement avec lesdits guides, le piston comportant en outre un second côté opposé et des doigts s'étendant axialement depuis ce second côté et configurés pour coopérer par glissement avec une périphérie interne dudit rebord, et
- un organe élastiquement déformable monté entre la tête et la bague et configuré pour solliciter le joint en appui axial contre ledit siège,

ledit piston étant mobile axialement depuis une position de fermeture de la vanne dans laquelle le premier joint est en appui axial sur ledit siège, jusqu'à une position d'ouverture de la vanne dans laquelle le premier joint est à distance axiale dudit siège, ce déplacement étant destiné à être provoqué par un fluide qui est destiné à appliquer une force sur ledit second côté, qui est supérieure à une force de rappel élastique imposée par ledit organe,
ladite tête comprenant à sa périphérie externe des ergots qui s'étendent en direction radiale par rapport audit axe et qui sont configurés pour prendre appui axialement contre un épaulement cylindrique interne dudit corps, lorsque le piston est dans ladite première position, afin de définir précisément cette première position, le fluide étant destiné à s'écouler entre ces ergots lorsque le piston est dans ladite seconde position.

La vanne selon l'invention est conçue pour optimiser l'écoulement du fluide en limitant les turbulences et pertes de charge. Pour cela, le piston de la vanne comprend des ergots radiaux entre lesquels peut circuler le fluide. Les inventeurs ont constaté que l'utilisation de tels ergots est avantageuse par rapport à l'utilisation d'une nervure annulaire externe s'étendant sur 360°, pour optimiser la section de passage du fluide tout en limitant les turbulences dans l'écoulement du fluide. Ceci permet d'améliorer les pertes de charge de la vanne et donc l'efficacité énergétique du circuit. Ces ergots sont configurés pour prendre appui axialement sur le corps de la vanne afin de définir de manière précise et positive la position de repos du piston dans la vanne. Dans cette position, le joint prend appui sur le siège et assure l'étanchéité de la vanne en position fermée.

Par ailleurs, l'organe élastique permet de maintenir le joint sur son siège et limite les vibrations du piston en fonctionnement, qui sont susceptibles de générer des bruits dans certaines phases transitoires. Ces vibrations peuvent se propager et créer des nuisances sonores dans l'habitacle du véhicule par exemple. La présence de cet organe permet également d'assurer l'étanchéité de la vanne en cas de faible écart de pression entre l'amont et l'aval du piston ou bien si la vanne est montée verticalement. Des fuites dans la vanne auraient pour effet d'augmenter la consommation énergétique du circuit.

La vanne selon l'invention peut comprendre une ou plusieurs des caractéristiques suivantes, prises isolément les unes des autres ou en combinaison les unes avec les autres :
- le corps tubulaire est en matériau plastique et/ou la bague est en matériau plastique ou en métal ;
- la bague est engagée dans ou sur le corps par encliquetage élastique ;
- le corps comprend à une extrémité axiale des encoches radiales définissant entre elles des lèvres élastiquement déformables en direction radiale, la bague étant destinée à être au moins en partie entourée par ces lèvres ;
- la surface cylindrique externe du corps comprend au moins une nervure annulaire d'ancrage dans ledit tuyau ;
- la surface cylindrique externe du corps comprend au moins une gorge annulaire externe, la vanne comportant en outre au moins un second joint annulaire monté dans cette gorge ;
- ledit siège est formé par une surface tronconique située sur un côté dudit rebord et/ou entre ce rebord et ledit épaulement ;
- lesdits doigts sont situés à une périphérie externe dudit second côté et sont chacun reliés à une arête en saillie sur ce second côté, ces arêtes s'étendant radialement par rapport à l'axe A depuis les doigts et se rejoignant au niveau de cet axe A ; ce second côté est donc profilé pour limiter les turbulences et pertes de charge dans l'écoulement du fluide ;
- lesdites arêtes sont reliées à une face radiale dudit second côté par des surfaces incurvées concaves à profil aérodynamique ;
- lesdites pattes sont reliées à une base en saillie sur ledit premier côté, cette base étant configurée pour prendre appui axialement contre lesdits guides, lorsque le piston est dans ladite seconde position, afin de définir précisément cette seconde position ; ce premier côté est de préférence profilé pour limiter les turbulences et pertes de charge dans l'écoulement du fluide ;
- le premier joint est situé dans une gorge annulaire externe de la tête qui est formée dans une surface cylindrique externe de la tête ;
   -- lesdits doigts s'étendant dans le prolongement axial de ladite surface cylindrique externe ;
- lesdits ergots sont en saillie sur un rebord annulaire externe de la tête, et en particulier sur une surface annulaire de ce rebord qui a en section axiale une forme arrondie convexe ;
- ledit rebord a un diamètre maximal externe inférieur à un diamètre interne dudit épaulement et lesdits ergots ont des extrémités radiales externes qui sont situées sur une circonférence centrée sur l'axe A qui a un diamètre compris entre le diamètre interne dudit épaulement et son diamètre externe ;

-- le nombre d'ergots est compris entre 2 et 10, et de préférence entre 2 et 4 ;
-- chacun des ergots 166 a une étendue circonférentielle autour dudit axe A qui est comprise entre 5 et 60°,
-- la somme totale des étendues circonférentielles des ergots représente de préférence au plus 180° ;
-- lesdits guides se rejoignent au niveau dudit axe ;
-- ledit élément élastique est monté ajusté autour desdites pattes, et est de préférence un ressort hélicoïdal de compression ;
-- ledit élément élastique est en appui axial sur lesdits guides qui peuvent comporter chacun une butée radiale sur cet élément ;

La présente invention concerne également un tuyau pour un circuit de fluide, en particulier automobile, comportant une vanne telle que décrite ci-dessus, qui est insérée dans :
- un tronçon de ce tuyau, de préférence après déformation plastique de ce dernier afin d'en élargir son diamètre interne, ou
- un alésage d'un bloc fixé, par exemple par brasage ou soudage, à une extrémité du tuyau. Une bride annulaire de fixation peut être intégrée à ce bloc pour permettre sa fixation, par au moins un élément de fixation, à une bride annulaire complémentaire. En variante, l'alésage du bloc peut former, du côté opposé au tuyau, un embout femelle destiné à recevoir un embout mâle complémentaire d'un autre tuyau. Un système d'encliquetage élastique peut être monté sur le bloc et permettre la retenue axiale des embouts l'un dans l'autre.

La présente invention concerne également un véhicule, comportant au moins une vanne ou un tuyau tel que décrit ci-dessus.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une vue schématique en perspective d'un dispositif de raccordement fluidique selon un premier mode de réalisation ne formant pas partie de l'invention telle que revendiquée
[Fig. 2] la figure 2 est une vue schématique en coupe axiale du dispositif de la figure 1, la vanne selon l'invention y étant visible;
[Fig. 3] la figure 3 est une vue schématique en perspective de tuyaux du dispositif de la figure 1 ;
[Fig. 4] la figure 4 est une vue schématique en perspective d'une vanne insérable anti-retour selon l'invention telle que revendiquée et adaptée au dispositif de la figure 1 ;
[Fig. 5] la figure 5 est une vue schématique en perspective et en coupe axiale de l'un des tuyaux du dispositif de la figure 1 ;
[Fig. 6] la figure 6 est une vue schématique en perspective et en coupe axiale de l'autre tuyau du dispositif de la figure 1 ;
[Fig. 7] la figure 7 est une vue schématique en coupe axiale d'un corps de la vanne de la figure 4 ;
[Fig. 8] la figure 8 est une vue schématique en perspective d'une bague de la vanne de la figure 4 ;
[Fig. 9] la figure 9 est une vue schématique en perspective d'un piston de la vanne de la figure 4 ;
[Fig. 10] la figure 10 est une autre vue schématique en perspective du piston de la vanne de la figure 4 ;
[Fig. 11] la figure 11 est une vue schématique en perspective du piston, d'un joint et d'un organe élastique de la vanne de la figure 4 ;
[Fig. 12] la figure 12 est une vue schématique en perspective du piston, du joint, de l'organe élastique et de la bague de la vanne de la figure 4 ;
[Fig. 13] la figure 13 est une vue schématique en coupe axiale de la vanne de la figure 4, et représente une position de fermeture de la vanne ;
[Fig. 14] la figure 14 est une vue schématique en coupe transversale selon la ligne XV-XV de la figure 13 ;
[Fig. 15] la figure 15 est une vue schématique en coupe axiale de la vanne de la figure 4, et représente une position d'ouverture de la vanne ;
[Fig. 16] la figure 16 est une vue schématique en coupe axiale d'une variante de réalisation d'un dispositif de raccordement fluidique ne formant pas partie de l'invention telle que revendiquée mais comprenant la vanne selon l'invention telle que revendiquée ;
[Fig. 17] la figure 17 est une vue schématique en perspective d'un embout tubulaire du dispositif de la figure 16 ;
[Fig. 18] la figure 18 est une vue schématique en perspective de l'embout tubulaire et d'une bride du dispositif de la figure 16 ;
[Fig. 19] la figure 19 est une vue schématique en coupe axiale d'une autre variante de réalisation d'un dispositif de raccordement fluidique ne formant pas partie de l'invention telle que revendiquée mais comprenant la vanne selon l'invention telle que revendiquée
[Fig. 20] la figure 20 est une vue schématique en perspective et en coupe axiale d'un tuyau et d'une bride du dispositif de la figure 19 ;
[Fig. 21] la figure 21 est une vue schématique en perspective et en coupe axiale similaire à celle de la figure 12, et représente une variante de réalisation du dispositif ; et
[Fig. 22] la figure 22 est une vue schématique en coupe axiale d'une autre variante de réalisation du dispositif.

### Description détaillée de l'invention

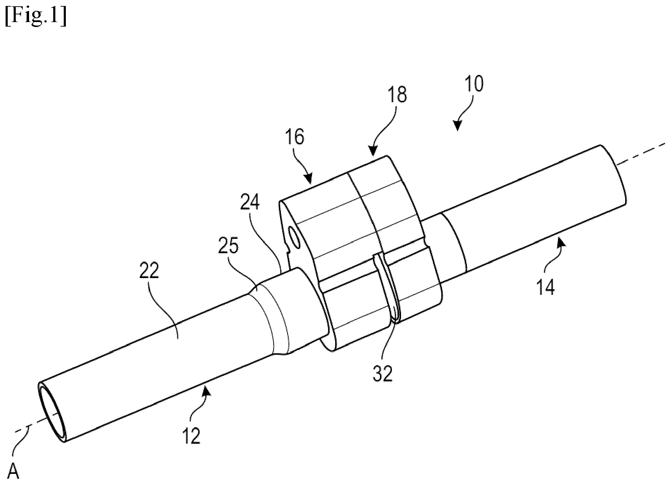

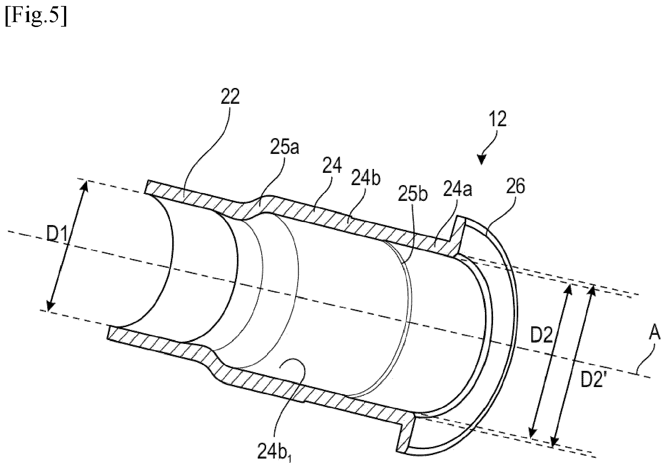

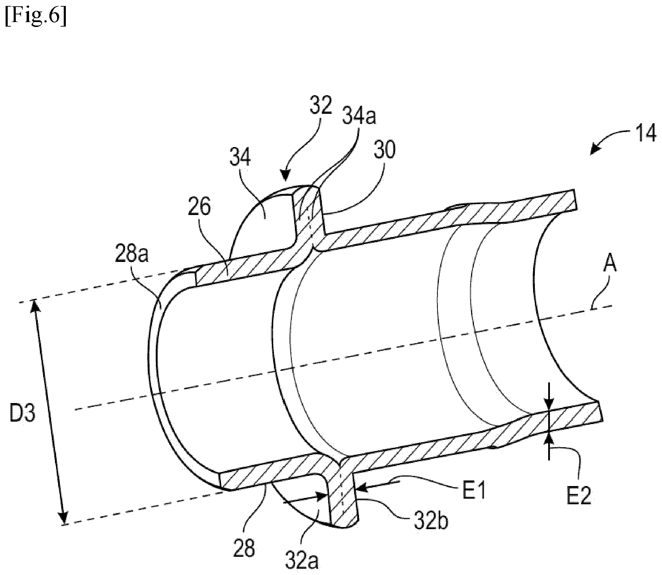

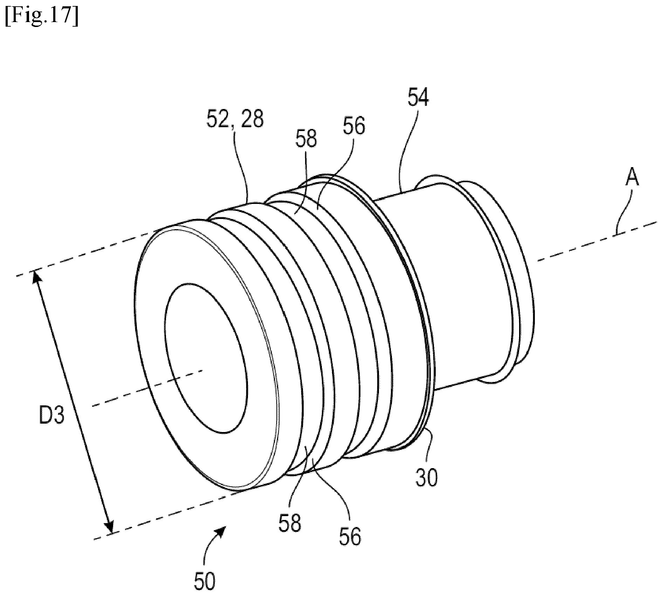

Les figures 1 à 17 illustrent un premier mode de réalisation d'un dispositif 10 de raccordement fluidique pour un circuit de fluide, ainsi que d'une vanne 100 insérable anti-retour pour un tel dispositif ou un tel circuit. Ce dispositif 10 est avantageusement du type autonome ou non-piloté.

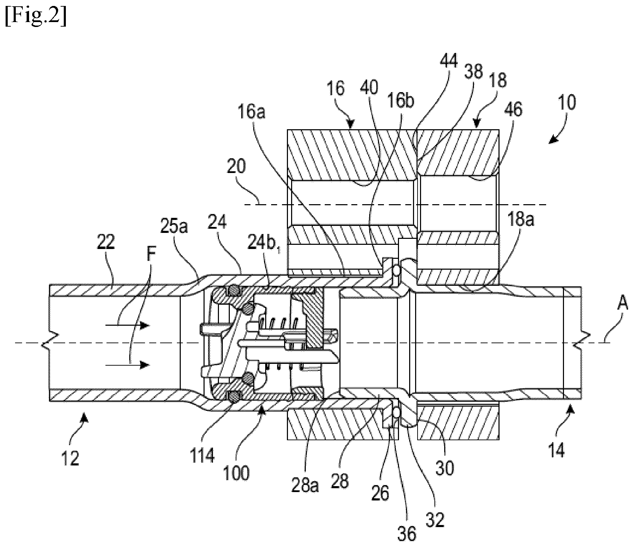

Les figures 1 et 2 montrent le dispositif 10 dans sa totalité. Ce dispositif 10 comprend :
- un premier tuyau 12 et un second tuyau 14,
- une première bride 16 montée autour du premier tuyau 12, et une seconde bride 18 montée autour du second tuyau 14,
- au moins un élément 20 de fixation des brides 16, 18, et
- la vanne 100 qui est insérée dans le premier tuyau 12.

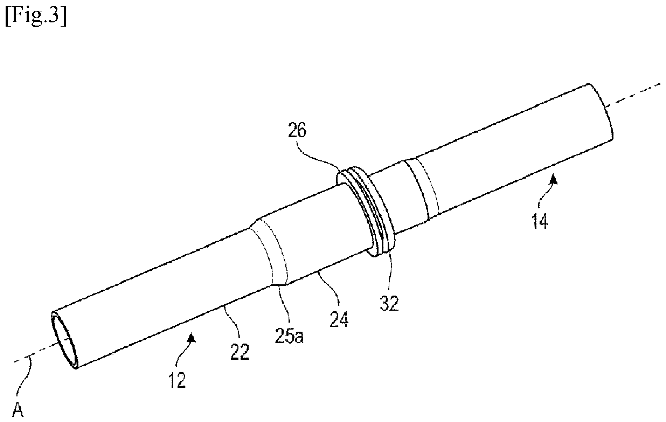

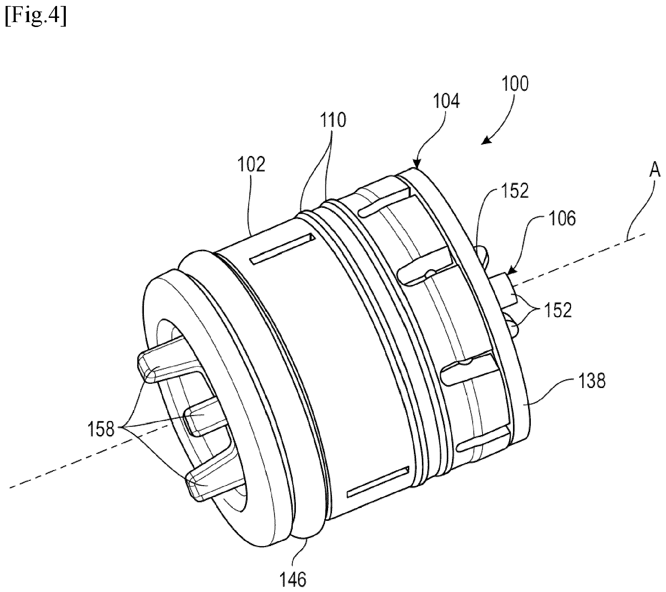

Les figures 3, 5 et 6 illustrent les tuyaux 12, 14 et montrent des détails de ces tuyaux. Les figures 4 et 7 à 15 illustrent la vanne 100 et montrent des composants et détails de cette vanne.

Les différentes pièces du dispositif 10 vont maintenant être décrites les unes après les autres.

Le premier tuyau 12 est partiellement représenté dans les dessins. Il peut avoir une forme quelconque, par exemple droite, coudée ou incurvée. Le tuyau 12 est tubulaire et a une section de passage de forme circulaire dans l'exemple représenté.

Le tuyau 12 est réalisé dans un matériau plastiquement déformable, et par exemple en métal. La capacité de déformation plastique du tuyau 12 permet par exemple d'autoriser l'élargissement de son diamètre interne.

Le tuyau 12 comporte un tronçon principal 22 de diamètre interne D1 et un tronçon secondaire 24 ayant au moins un diamètre interne D2 supérieur à D1. Dans l'exemple représenté, le tronçon secondaire 24 comprend une première portion 24a de diamètre interne D2' supérieur à D1, et une seconde portion 24b de diamètre interne D2 située entre le tronçon principal 22 et la première portion 24a, D2 étant supérieur à D1 et inférieur à D2'.

Le tronçon secondaire 24 est situé à une extrémité du premier tuyau 12 et relié au tronçon principal 22 par un premier rétrécissement 25a. Un second rétrécissement 25b sépare les première et seconde portions 24a, 24b.

Le tuyau 12 comporte une première collerette annulaire externe 26 qui est de préférence située à une extrémité axiale du tuyau 12 et du tronçon 24.

Le second tuyau 14 est partiellement représenté dans les dessins. Il peut avoir une forme quelconque, par exemple droite, coudée ou incurvée. Le tuyau 14 est tubulaire et a une section de passage de forme circulaire dans l'exemple représenté.

Le tuyau 14 est de préférence réalisé dans un matériau plastiquement déformable, et par exemple en métal. La capacité de déformation plastique du tuyau 14 permet par exemple d'autoriser la modification de son diamètre externe.

Le tuyau 14 comporte un tronçon d'extrémité 28 de diamètre externe D3 qui est configuré pour être engagé suivant un axe A dans le tronçon secondaire 24 du premier tuyau 12. D3 est égal ou légèrement inférieur à D2' voire D2. Le tuyau 14 comporte un épaulement cylindrique externe 30 qui est ici formé par une seconde collerette annulaire externe 32.

Dans l'exemple représenté, la collerette 32 est située à distance axiale de l'extrémité libre 28a du tronçon d'extrémité 28 située du côté du tuyau 12.

La collerette 32 est ici obtenue par déformation plastique du tuyau 14. La collerette 32 est formée par une boursouflure annulaire externe 34 dont des parois annulaires 34a en regard sont serrées axialement l'une contre l'autre de sorte que la collerette 32 ait une épaisseur axiale E1 supérieure à une épaisseur radiale E2 du tuyau 14.

La collerette 32 comprend une face annulaire 32a située du côté de l'extrémité libre 28a, et une face annulaire 32b située du côté opposée et formant l'épaulement 30 précité.

Comme cela est visible aux figures 2 et 3, le tuyau 14 est engagé dans le tuyau 12. Plus précisément, le tronçon d'extrémité 28 est engagé dans le tronçon secondaire 24 et plus exactement dans la première portion 24a de ce tronçon secondaire 24.

L'engagement des tronçons 28, 24 est réalisé le long de l'axe A jusqu'à ce que les collerettes 26, 32 soient en appui axial l'une contre l'autre, soit directement soit par l'intermédiaire d'un joint annulaire d'étanchéité 36. Le joint 36 est alors intercalé axialement entre la collerette 26 et la face 32a de la collerette 32.

La bride 16 est montée autour du tuyau 12 et en particulier autour du tronçon secondaire 24 du tuyau 12.

Dans l'exemple représenté, la bride 16 est formée d'une seule pièce et comprend un premier orifice 16a traversé par le tronçon secondaire 24. Comme on le voit à la figure 2 notamment, l'orifice 16a comprend un diamètre interne adapté au diamètre externe du tronçon 24. A une extrémité axiale, l'orifice 16a peut déboucher dans une rainure annulaire 16b destinée à accueillir la collerette 26. La bride 16 prend appui axialement sur la collerette 26 ou la collerette 26 est en appui axial sur la bride 16.

La bride 16 comprend en outre une face 38 d'appui sur l'autre bride 18. Cette face 38 s'étend dans un plan perpendiculaire à l'axe A.

La bride 16 comprend en outre au moins un trou 40 de réception de l'élément de fixation 20. La bride 16 peut en outre comprendre au moins un trou 42 de réception ou de montage d'un doigt (non représenté) de centrage porté ou destiné à coopérer avec l'autre bride 18.

La bride 16 est de préférence montée sur le tuyau 12 avant sa déformation plastique. La déformation plastique du tuyau 12 peut de préférence être utilisée pour assurer la fixation et le maintien de la bride 16 sur le tuyau, à la manière d'un sertissage. En variante ou en caractéristique additionnelle, la bride 16 pourrait être soudée ou brasée sur le tuyau 12.

La bride 18 est montée autour du tuyau 14 et en particulier autour du tronçon d'extrémité 28 du tuyau 14.

Dans l'exemple représenté, la bride 18 est formée d'une seule pièce et comprend un premier orifice 18a traversé par le tronçon d'extrémité 28. Comme on le voit à la figure 2 notamment, l'orifice 18a comprend un diamètre interne adapté au diamètre externe du tronçon 28. La bride 18 prend appui axialement sur la collerette 32 ou la collerette 32 est en appui axial sur la bride 18.

La bride 18 comprend en outre une face 44 d'appui sur la face 38 de l'autre bride 16. Cette face 44 s'étend dans un plan perpendiculaire à l'axe A.

La bride 18 comprend en outre au moins un orifice 46 de réception de l'élément de fixation 20. La bride 18 peut en outre comprendre au moins un trou 48 de réception ou de montage du doigt (non représenté) précité.

En variante ou en caractéristique additionnelle, la bride 18 pourrait être soudée ou brasée sur le tuyau 14.

Comme cela est visible à la figure 2, les faces 38, 44 des brides 16, 18 sont appliquées axialement l'une sur l'autre et les orifices 40, 46 sont alignés de sorte que l'élément de fixation 20 puisse y être engagé.

Cet élément de fixation 20 est par exemple une vis ou un boulon, les trous 40, 46 pouvant être au moins en partie taraudés.

La fixation et le serrage axial des brides 16, 18, dans un plan de liaison sensiblement perpendiculaire à l'axe A, permet de rapprocher les collerettes 26, 32 l'une de l'autre et de maintenir les tuyaux 12, 14 engagés l'un dans l'autre. Il permet également de serrer axialement le joint 36 et d'assurer l'étanchéité de l'assemblage.

La vanne 100 est montée à l'intérieur du tronçon secondaire 24 du tuyau 12, et plus exactement dans la première portion 24a, et est située axialement entre le rétrécissement 25a et le tronçon d'extrémité 28 du tuyau 14. Elle est donc ici située à distance axiale de l'extrémité libre et de la collerette 26 du tuyau 12.

La vanne 100 comprend pour l'essentiel quatre pièces à savoir :
- un corps tubulaire 102,
- une bague 104 fixée à une extrémité axiale du corps 102,
- un piston 106 monté dans le corps 102, et
- un organe 108 élastiquement déformable sollicitant le piston 106 dans une position de fermeture de la vanne 100.

Le corps 102, la bague 104 et le piston 106 sont de préférence réalisés en matériau plastique, chargé ou non chargé. En variante, au moins certaines de ces pièces pourraient être réalisées en métal.

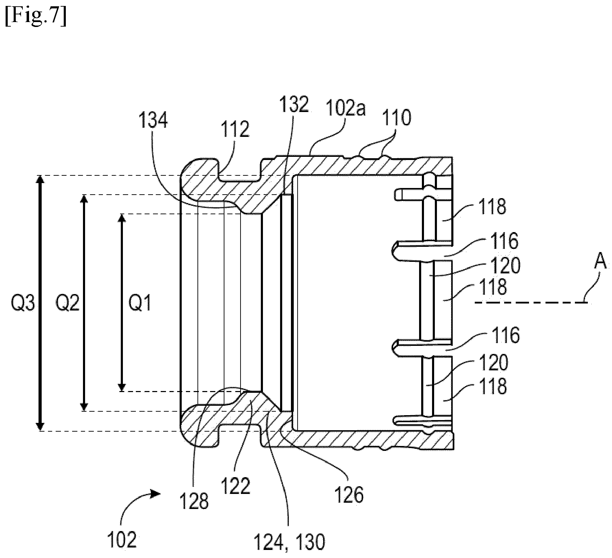

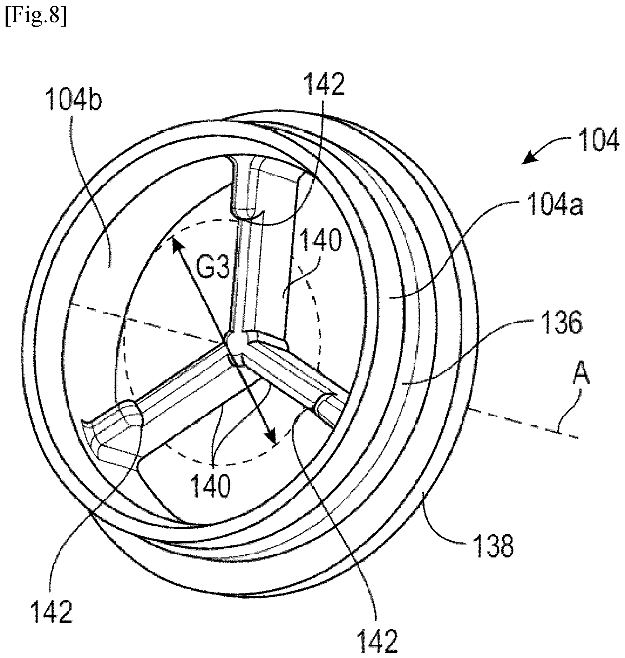

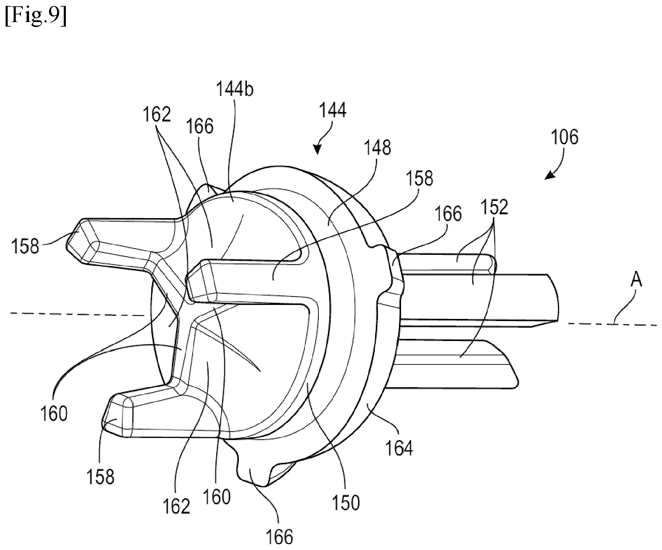

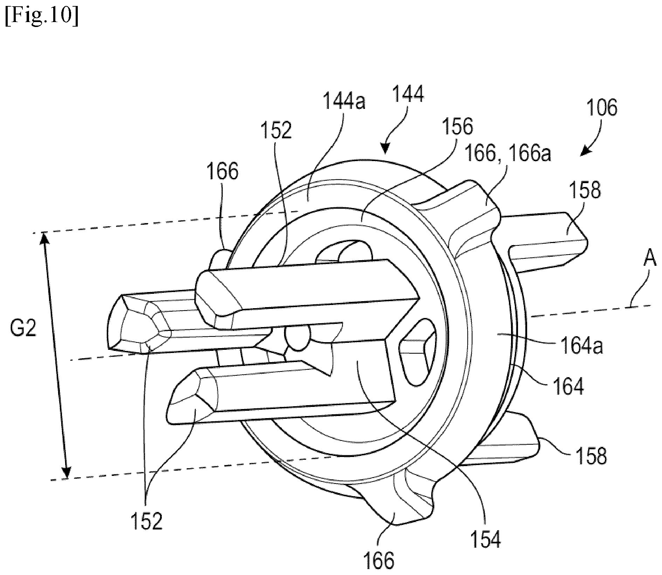

La figure 7 représente le corps 102 seul. La figure 8 représente la bague 104 seule, et les figures 9 et 10 représentent le piston 106 seul.

Le corps 102 a une forme tubulaire dont l'axe principal est destiné à être aligné sur l'axe A lorsque la vanne 100 est insérée dans le tuyau 12.

Le corps 102 comprend une surface cylindrique externe 102a configurée pour être entourée par la surface cylindrique interne 24b1 de la portion 24b du tuyau 12.

Dans l'exemple représente, le corps 102 comprend au moins une nervure ou gaudron annulaire 110 d'ancrage en saillie sur cette surface 102a. Cette nervure 110 s'étend autour de l'axe A et est destiné à coopérer avec la surface 24b1 pour empêcher, en fonctionnement, tout déplacement en translation de la vanne 100 dans le tuyau 12.

Le corps 102 peut comprendre une gorge annulaire 112 de réception d'un joint annulaire 114 d'étanchéité visible notamment à la figure 2. Cette gorge 112 est formée sur la surface 102a et est par exemple située à une extrémité axiale amont du corps 102, par référence à l'écoulement du fluide dans la vanne (selon la flèche F de la figure 2). Le joint 114 est toutefois facultatif et dépend de la pression du fluide. Il peut être nécessaire lorsque le fluide est considéré comme étant à haute pression (HP) et inutile lorsque le fluide est considéré comme étant à basse pression (BP).

À son extrémité aval, le corps 102 comprend une rangée annulaire d'encoches 116 qui s'étend d'une part en direction axiale depuis l'extrémité aval libre du corps, et d'autre part en direction radiale pour traverser toute l'épaisseur radiale du corps 102. Ces encoches 116 définissent entre elles des lèvres 118 élastiquement déformables en direction radiale. Le nombre de lèvres 118 est par exemple compris entre 5 et 15. Elles sont régulièrement réparties autour de l'axe A.

À son extrémité aval, le corps 102 comprend en outre une rainure annulaire interne 120 qui est ici formé dans les lèvres 118.

Le corps 102 comprend en outre un rebord annulaire interne 122, un siège annulaire interne 124 et un épaulement cylindrique interne 126.

Dans l'exemple représenté, le rebord 122, le siège 124 et l'épaulement 126 sont tous rassemblés du côté de l'extrémité amont du corps 102. L'épaulement 126 peut d'ailleurs être situé sur un côté (ici aval) du rebord 122, et le siège 124 peut s'étendre ou être situé entre le rebord 122 et l'épaulement 126.

Le rebord 122 est par exemple situé sensiblement au droit de la gorge 112. Le rebord 122 comprend à sa périphérie interne une surface sensiblement cylindrique 128 qui a un diamètre interne Q1.

L'épaulement 126 est orienté vers l'aval et a un diamètre interne Q2 et un diamètre externe Q3.

Le siège 124 est ici formé par une surface tronconique 130 qui s'étend depuis la surface 128 vers l'aval jusqu'à l'extrémité amont d'une surface cylindrique 132 dont l'extrémité aval est reliée à la périphérie interne de l'épaulement 126. La surface 130 est évasée vers l'aval. Autrement dit, le siège 124 a un diamètre interne Q1 et un diamètre externe Q2.

Dans l'exemple représenté, la surface 128 peut être reliée à l'amont à une autre surface tronconique 134 qui est cette fois-ci évasée vers l'amont.

La bague 104 est montée au moins en partie dans le corps 102. En variante, elle pourrait être montée au moins en partie sur le corps 102.

Dans l'exemple représenté, le montage de la bague 104 dans le corps 102 est réalisé par encliquetage élastique. Pour cela, la bague 104 comprend une surface cylindrique externe 104a destinée à être engagée dans l'extrémité aval du corps 102 et à être entourée par les lèvres 118, ainsi qu'une nervure annulaire 136 destinée à être engagée dans la rainure 120 de ces lèvres 118.

À son extrémité aval, la bague 104 comprend un rebord annulaire externe 138 apte à prendre appui axialement sur l'extrémité aval libre du corps 102. La bague 104 comprend des guides 140 s'étendant en direction radiale par rapport à l'axe A. Ces guides 140 sont ici au nombre de trois et forment une croix ou une étoile à trois branches. Les guides 140 s'étendent depuis une surface cylindrique interne 104b de la bague 104 jusqu'à l'axe A et se rejoignent au niveau de cet axe.

Chacun des guides 140 a deux parois latérales 140a parallèles entre elles et à l'axe A. Du côté amont, les guides 140 comportent chacun une butée radiale 142 orientée vers l'axe A.

Le piston 106 comporte une tête 144 portant un joint annulaire d'étanchéité 146 configuré pour venir en appui sur le siège 124. Pour cela, la tête 144 comprend une gorge annulaire externe 148 qui est ici formé sur une surface cylindrique externe 150 de la tête.

Le piston 106 comprend en outre à un premier côté axial, ici aval, des pattes 152 s'étendant axialement vers l'aval et configurées pour coopérer par glissement avec les guides 140.

Les pattes 152 s'étendent vers l'aval depuis la tête 144 et sont au nombre de trois dans l'exemple représenté. Elles ont chacune une forme générale allongée le long de l'axe A et sont régulièrement réparties autour de cet axe. Les extrémités amont des pattes 152 sont reliées à la tête 14 par une base centrale 154 qui est en saillie sur une face radiale aval 144a de la tête 144.

Les pattes 152 comprennent chacune une surface longitudinale 152a orientée radialement vers l'extérieur, qui est arrondie convexe. Les surfaces 152a des pattes s'étendent sur une circonférence centrée sur l'axe A, qui a un diamètre G1.

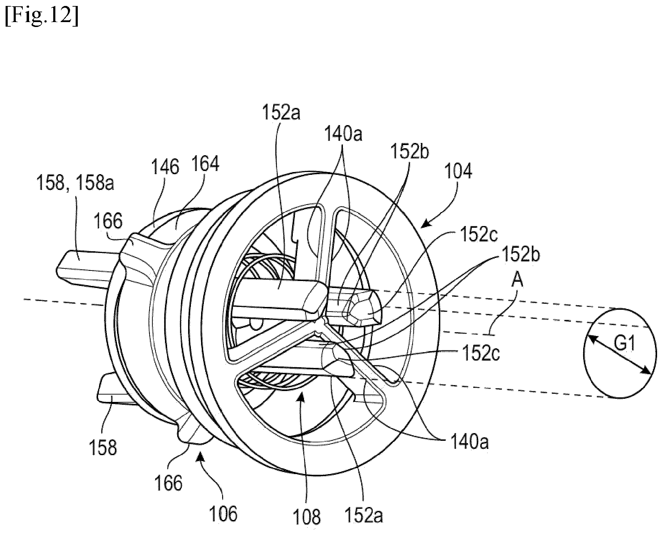

Les pattes 152 comprennent chacune deux surfaces disposées en biseau 152b et orientées radialement vers l'intérieur. Ces surfaces 152b sont destinées à coopérer par glissement avec les parois latérales 140a des guides 140, comme cela est illustré à la figure 12 notamment. Les guides 140 permettent ainsi de guider le piston 106 en translation en limitant les frottements et la rotation du piston potentiellement bruyante.

Enfin, les pattes 152 ont leurs extrémités aval libres qui sont également biseautées et comprennent une face d'extrémité 152c inclinée pour faciliter l'insertion et le guidage des pattes 152 entre les guides 140 de la bague 104 lors de l'assemblage de la vanne 100.

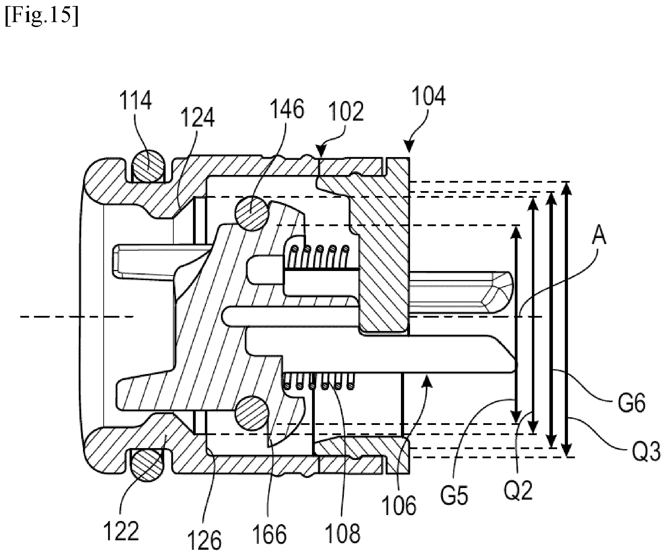

Dans la position d'ouverture de la vanne 100 représentée à la figure 15, le piston 106 est situé à l'aval et sa position de fin de course est définie positivement et avec précision par appui axial de la base 154 sur les guides 140 (figure 15).

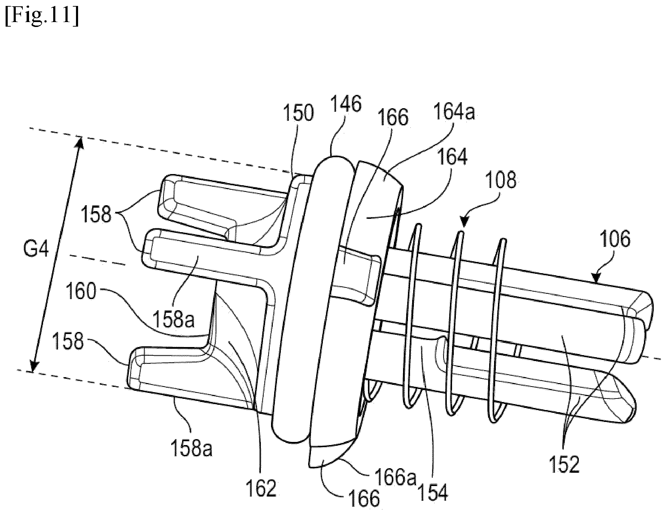

L'organe 108 peut être monté ajusté autour des pattes 152 et a alors un diamètre interne égal ou proche de G1 (figures 11 et 12). L'organe 108 s'étend autour de l'axe A et est intercalé axialement entre la tête 144 et la bague 104. Dans l'exemple représenté, il prend appui à l'amont sur la face 144a et à l'aval sur les guides 140.

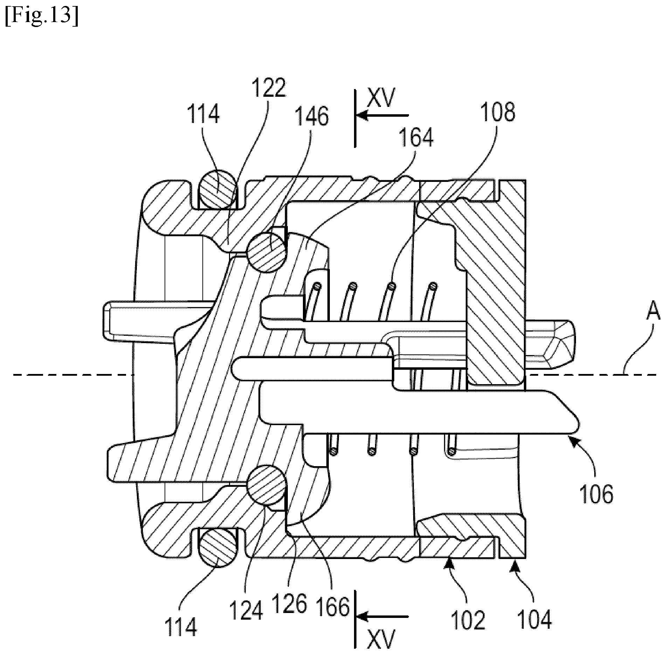

Comme cela est visible aux figures 13 et 15 notamment, l'extrémité amont de l'organe 108 est engagée dans un renfoncement annulaire 156 de la tête, dont le diamètre interne G2 est supérieur au diamètre externe de l'organe 108.

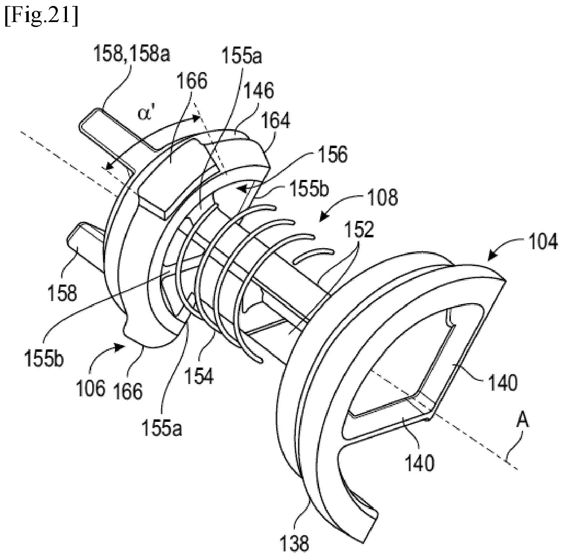

En variante, et comme illustré à la figure 21, cette extrémité de l'organe 108 pourrait être en appui sur des nervures radiales 155a, 155b en saillie dans le renfoncement 156. Certaines de ces nervures 155a pourraient être alignées axialement avec les pattes 152, et s'étendre dans leur prolongement. D'autres de ces nervures 155b pourraient être intercalées entre les nervures 155a et être reliées à la base 154. Dans l'exemple représenté, les nervures 155a ont une largeur ou étendue circonférentielle autour de l'axe A, qui est supérieure à celle des nervures 155b.

L'extrémité aval de l'organe 108 est entourée par les butées 142 qui s'étendent sur une circonférence dont le diamètre G3 est supérieur au diamètre externe de l'organe 108.

L'organe 108 est de préférence un ressort hélicoïdal de compression comme dans l'exemple représenté.

Le piston 106 comprend en outre à un second côté axial, ici amont, des doigts 158 s'étendant axialement vers l'amont et configurés pour coopérer par glissement avec le rebord 122 et en particulier sa surface 128.

Les doigts 158 s'étendent vers l'amont depuis la tête 144 et sont au nombre de trois dans l'exemple représenté. Ils ont chacune une forme générale allongée le long de l'axe A et sont régulièrement réparties autour de cet axe. Les extrémités aval des doigts 158 sont reliées à une face amont 144b de la tête.

Les doigts 158 comprennent chacun une surface longitudinale 158a orientée radialement vers l'extérieur, qui est arrondie convexe, et qui s'étend ici dans le prolongement de la surface 150. Cette surface 150 a un diamètre G4 légèrement inférieur au diamètre Q1, comme cela est visible à la figure 13 notamment, de façon à ce que les surfaces 158a, 150 puissent coulisser sur la surface 128 du rebord 122 en fonctionnement lors du déplacement du piston 106.

Les doigts 158 sont situés à une périphérie externe de la tête 144 et sont chacun reliés à une arête 160 en saillie sur la face 144b précitée.

Ces arêtes 160 s'étendent radialement par rapport à l'axe A depuis les doigts 158 et se rejoignant au niveau de cet axe A (figure 9).

Les arêtes 160 sont reliées à la face 144b par des surfaces incurvées concaves 162 à profil aérodynamique ou aéraulique pour limiter les turbulences et pertes de charge dans l'écoulement du fluide. Ce côté de la tête 144 constitué le côté amont du piston 106 qui est destiné à faire face au fluide lors de son écoulement dans la vanne 100 (flèches F).

La tête 144 du piston 106 comprend en outre un rebord annulaire externe 164 sur lequel des ergots 166 sont situés en saillie et s'étendent radialement vers l'extérieur.

Le nombre d'ergots 166 est compris entre 2 et 10, et de préférence entre 2 et 4. Dans l'exemple représenté, les ergots 166 sont au nombre de trois et sont régulièrement répartis autour de l'axe A.

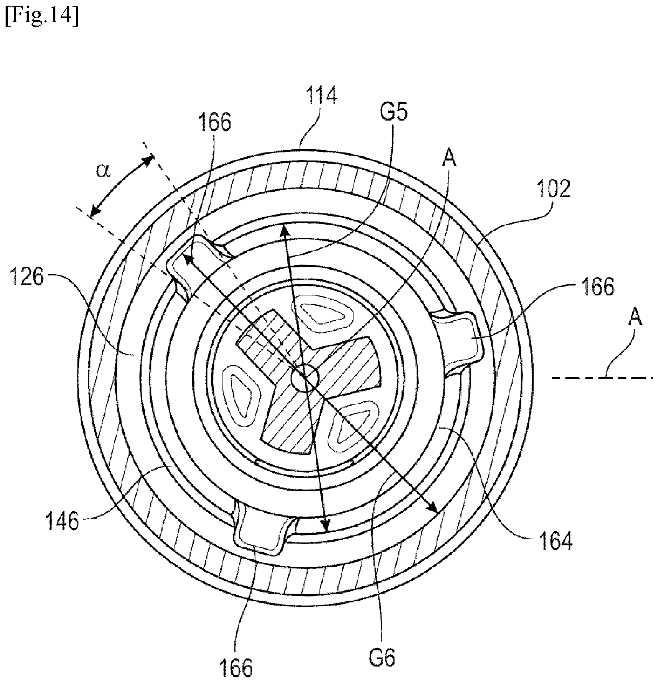

Le rebord 164 a un diamètre externe G5 et les ergots 166 s'étendent depuis ce diamètre G5, et leurs extrémités radialement externes sont situées sur une circonférence ayant un diamètre G6 (cf. figure 14).

Dans le mode de réalisation représenté à la figure 14, chacun des ergots 166 a une étendue circonférentielle α autour de l'axe A comprise entre 5 et 30°, et de préférence entre 10 et 20°. La somme totale des étendues circonférentielles α des ergots 166 représente de préférence au plus 90°, de façon à ce que les espaces libres circonférentiels compris entre les ergots 166 représentent au moins 270°.

Dans la variante de réalisation de la figure 21, chacun des ergots 166 a une étendue circonférentielle a' autour de l'axe A comprise entre 30 et 60°, et de préférence entre 30 et 50°. La somme totale des étendues circonférentielles a' des ergots 166 représente de préférence au plus 180°, de façon à ce que les espaces libres circonférentiels compris entre les ergots 166 représentent au moins 180°.

Comme cela est visible à la figure 13 notamment, G5 est inférieur à Q2 et G6 est supérieur à Q2 et inférieur à Q3. De cette façon, les ergots 166 sont aptes à prendre appui axialement sur l'épaulement 126. Cet appui permet de définir de manière positive et précise la position de repos du piston 106 et de fermeture de la vanne 100. Dans cette position, le joint 146 est en appui axial sur le siège 124. Les ergots 166 protègent ainsi le joint 146, en limitant son écrasement axial, tout en limitant les pertes de charges et ainsi réduisant la consommation énergétique du circuit dans un espace réduit.

De préférence, comme illustré notamment à la figure 10, le rebord 164 comprend une surface annulaire externe 164a qui a en section axiale une forme arrondie convexe pour optimiser l'écoulement du fluide. C'est également de préférence le cas des ergots 166 qui comprennent chacun une surface externe 166a arrondie convexe.

Comme évoqué dans ce qui précède, le piston 106 de la vanne 100 est donc mobile axialement depuis la position de fermeture illustrée à la figure 13 dans laquelle le joint 146 est en appui axial sur le siège 124 et les ergots 166 sont en appui sur l'épaulement 126, jusqu'à la position d'ouverture de la vanne 100 illustrée à la figure 14 dans laquelle le joint 146 est à distance axiale du siège 124 et la base 154 est en appui sur les guides 140.

Le déplacement du piston 106 est destiné à être provoqué par le fluide qui est destiné à appliquer une force sur le côté amont de la tête du piston 106, qui est supérieure à une force de rappel élastique imposée par l'organe 108. Cette force nécessaire à l'ouverture de la vanne 100 correspond par exemple à une pression du fluide inférieure à 100mbar.

Le dispositif 10 selon l'invention peut être assemblé de la façon suivante. La bride 16 est engagée sur le tuyau 12 et la bride 18 est engagée sur le tuyau 14. Chacun des tuyaux 12, 14 est déformé plastiquement pour modifier son diamètre interne ou externe, comme évoqué dans ce qui précède. La vanne 100 est ensuite engagée en force dans le tronçon secondaire 24 du tuyau 12, jusque dans sa portion 24b. Une fois encastrée dans le tuyau 12, la vanne 100 est de préférence indémontable. En effet, le démontage de la bague 104 par extraction du corps 102 n'est plus possible du fait que les lèvres 118 du corps sont en appui sur la surface 24b1 du tuyau 12 et ne peuvent plus se déformer élastiquement vers l'extérieur de manière à autoriser la translation axiale vers l'aval de la bague 104. Cette bague 104 assure le maintien des autres éléments de la vanne 100. Le tronçon 28 du tuyau 14 est ensuite engagé en translation dans le tronçon 24 du tuyau 12 et en particulier dans sa portion 24a. Les brides 16, 18 sont positionnées de façon à ce que leurs trous 40, 46 soient alignés. Pour cela, les trous 42, 48 des brides 16, 48 peuvent recevoir un doigt de guidage, comme évoqué dans ce qui précède. L'élément de fixation 20 est engagé dans les trous 42, 48 et permet de serrer axialement les brides 16, 18 l'une contre l'autre et assurer le serrage axial du joint 36. La vanne 10 est emprisonnée axialement dans le tuyau 12, entre son rétrécissement 25a et l'extrémité libre 28a de l'autre tuyau 14.

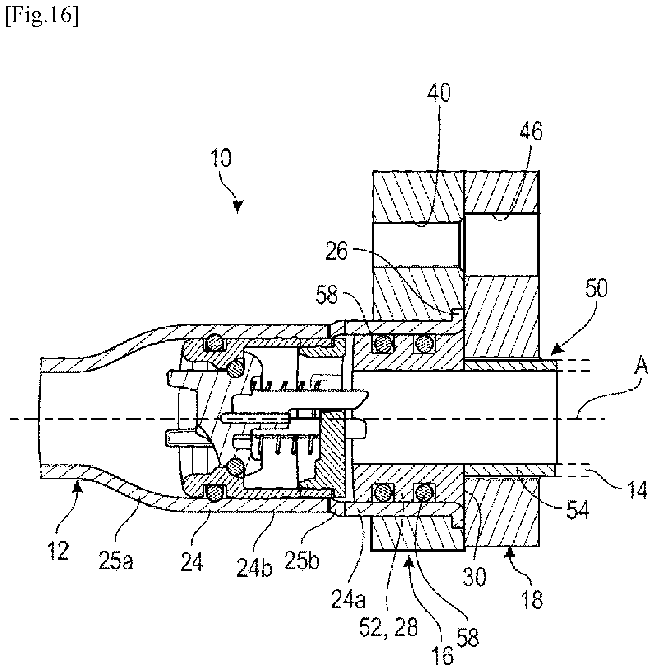

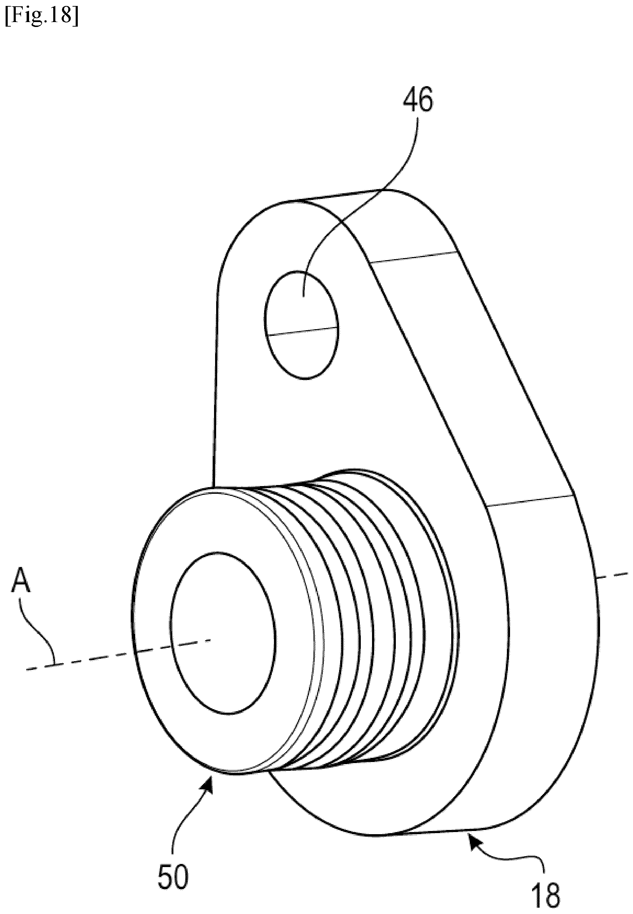

Les figures 16 à 18 illustrent une première variante de réalisation du dispositif 10 dans laquelle le tuyau 12, la bride 16 et la vanne 100 sont sensiblement identiques au précédent mode de réalisation des figures 1 à 15.

Le tronçon d'extrémité 28 est ici formé par un embout tubulaire 50 qui est destiné à être rapporté et fixé à une extrémité libre d'un tuyau (non représenté). Cette fixation peut avoir lieu par soudage par exemple.

La bride 18 est similaire à celle décrite dans ce qui précède mais son orifice 18a est ici traversé par l'embout 50 et non pas le tuyau 14.

L'embout 50 comprend deux portions 52, 54 de même diamètre interne mais de diamètres externes différents.

L'embout 50 comprend une première portion 52 définissant le tronçon d'extrémité 28 et destinée à être engagée dans le tronçon secondaire 24. Cette première portion 52 a donc un diamètre externe D3. Cette première portion 52 comprend ici une surface cylindrique externe sur laquelle sont formés des gorges annulaires 56 de montage de joints annulaires d'étanchéité 58.

L'embout 50 comprend une seconde portion 54 de plus petit diamètre destinée à traverser l'orifice 18a de la bride 18.

L'extrémité aval de la première portion 52 définit l'épaulement cylindrique 30 précité et la bride 18 est destinée à prendre appui axialement sur cet épaulement 30, comme visible à la figure 16. Cet appui peut être assuré en réalisant un sertissage de l'embout dans l'orifice de la bride 18a.

Lors du serrage axial des brides 16, 18, l'épaulement cylindrique 30 est rapproché de la collerette 26 et vient même dans le plan radial dans lequel s'étend la face aval de cette collerette 26.

L'étanchéité axiale procurée par le joint 36 dans le précédent mode de réalisation est ici remplacée par une étanchéité radiale procurée par les joints 58. Ces joints 58 coopèrent avec la surface cylindrique interne du tronçon 24 et de sa portion 24a.

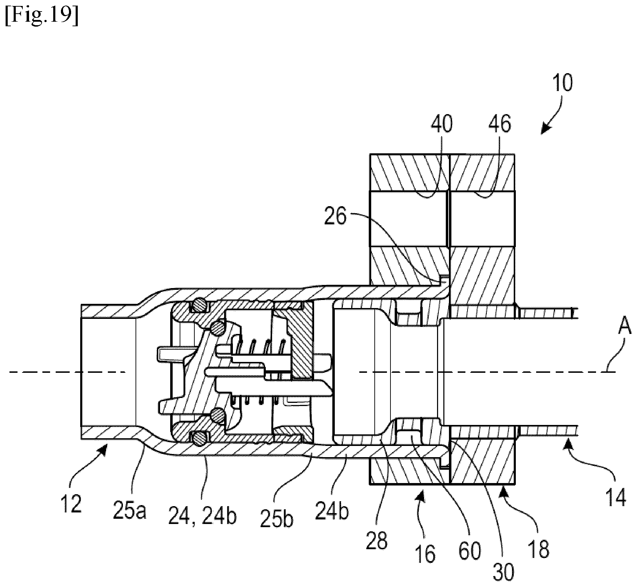

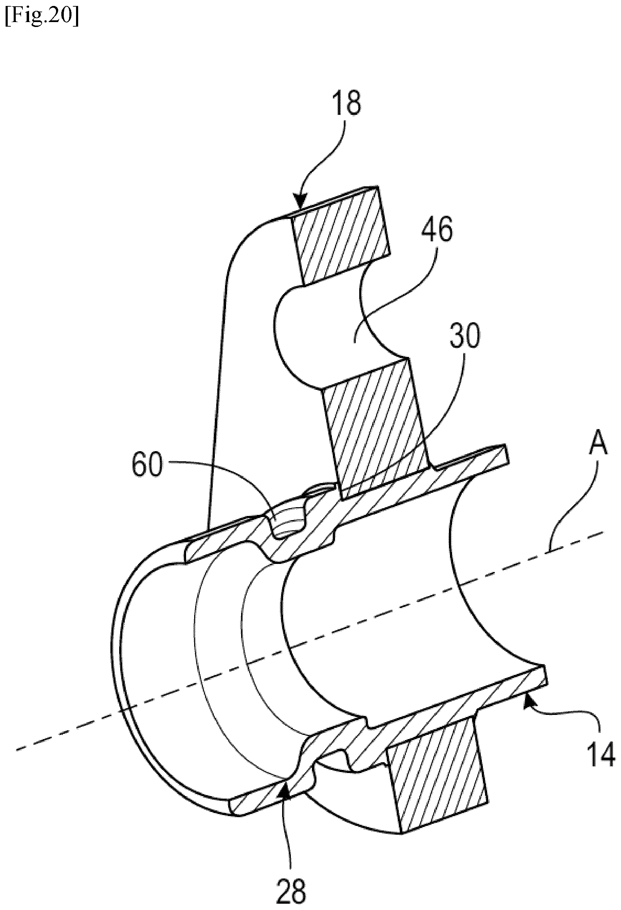

Les figures 19 et 20 illustrent une autre variante de réalisation du dispositif 100 dans laquelle le tuyau 12, la bride 16 et la vanne 100 sont sensiblement identiques au premier mode de réalisation des figures 1 à 15.

Le tronçon d'extrémité 28 est ici formé par le tuyau 14 qui comprend sur sa surface cylindrique externe une gorge annulaire 60 de réception d'un joint annulaire d'étanchéité (non représenté).

Comme dans la précédente variante, ce joint procure une étanchéité radiale de l'assemblage.

Le tuyau 14 est déformé plastiquement pour réaliser l'épaulement cylindrique 30 et de préférence également pour assurer la fixation par sertissage de la bride 18, qui est similaire à celle du premier mode de réalisation.

La bride 18 est destinée à prendre appui axialement sur cet épaulement 30 comme visible à la figure 19. Cet appui peut être assuré en réalisant le sertissage du tuyau 14.

Lors du serrage axial des brides 16, 18, l'épaulement cylindrique 30 est rapproché de la collerette 26 et vient même dans le plan radial dans lequel s'étend la face aval de cette collerette 26.

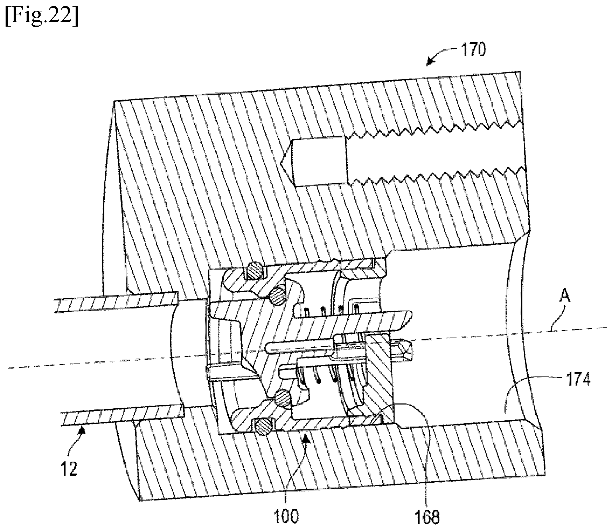

La figure 22 représente une variante de réalisation dans laquelle la vanne 100 est insérée dans un alésage 168 d'un bloc 170 fixé, par exemple par brasage ou soudage, à une extrémité du tuyau 12. Une bride annulaire de fixation peut être intégrée à ce bloc 170 pour permettre sa fixation, par au moins un élément de fixation, à une bride annulaire complémentaire.

En variante, l'alésage 168 du bloc peut former, du côté opposé au tuyau 12, un embout femelle 172 destiné à recevoir un embout mâle complémentaire d'un autre tuyau. Un système d'encliquetage élastique pourrait être monté sur le bloc et permettre la retenue axiale des embouts l'un dans l'autre.

La vanne 100 selon l'invention a notamment l'avantage d'être réversible et de pouvoir être montée dans un sens ou dans l'autre dans un tuyau (l'une ou l'autre de ses extrémité axiales peut être engagée en premier dans le tuyau). Elle a par exemple un diamètre externe compris entre 10 et 20mm, voire entre 12 et 18mm.

Le dispositif 10 selon l'invention a l'avantage de pouvoir être équipé d'une étanchéité radiale ou axiale sans que cela ait un impact significatif sur son assemblage. De plus, sa conception de type insert ou cartouche et ses matériaux de préférence plastiques, par exemple injectés, permettent de réduire le poids, l'encombrement et le coût du dispositif. Les tuyaux 12, 14 et l'embout 50 sont de préférence en métal et par exemple en aluminium.

Le dispositif 10 et la vanne 100 selon l'invention sont particulièrement adaptés pour équiper un circuit de fluide pour un véhicule, le circuit étant par exemple un circuit de climatisation et la vanne est par exemple montée entre un détendeur et un compresseur de ce circuit.

Le fluide est par exemple R134a ou R1234yf. Le fluide peut être sous forme liquide ou gazeuse et peut être à basse ou haute pression.

## Revendications

1. Vanne insérable anti-retour (100) pour un circuit de fluide, en particulier d'un véhicule, cette vanne (100) étant configurée pour être insérée dans un tuyau (12) et comportant :
- un corps tubulaire (102) ayant un axe principal A et comportant une surface cylindrique externe (102a) configurée pour être entourée par une surface cylindrique interne (24b1) du tuyau (12), ce corps (102) comportant un rebord annulaire interne (122) et un siège annulaire interne (124),
- une bague (104) montée au moins en partie dans ou sur ledit corps (102) et comportant des guides (140) s'étendant en direction radiale par rapport audit axe A,
- un piston (106) monté dans ledit corps (102) et comportant une tête (144) portant un premier joint annulaire d'étanchéité (146) configuré pour venir en appui sur ledit siège (124), le piston (106) comportant un premier côté , le piston (106) comportant en outre un second côté opposé,
- un organe (108) élastiquement déformable monté entre la tête (144) et la bague (104) et configuré pour solliciter le joint (146) en appui axial contre ledit siège (124),
ledit piston (106) étant mobile axialement depuis une position de fermeture de la vanne (100) dans laquelle le premier joint (146) est en appui axial sur ledit siège (124), jusqu'à une position d'ouverture de la vanne (100) dans laquelle le premier joint (146) est à distance axiale dudit siège (124), ce déplacement étant destiné à être provoqué par un fluide qui est destiné à appliquer une force sur ledit second côté, qui est supérieure à une force de rappel élastique imposée par ledit organe (108), la vanne étant **caractérisée en ce que** le piston (106) comporte des pattes (152) s'étendant axialement depuis le premier côté et configurées pour coopérer par glissement avec lesdits guides (140), le piston (106) comportant en outre des doigts (158) s'étendant axialement depuis le second côté et configurés pour coopérer par glissement avec une périphérie interne dudit rebord (122), et **en ce que**
ladite tête (144) comprend à sa périphérie externe des ergots (166) qui s'étendent en direction radiale par rapport audit axe (A) et qui sont configurés pour prendre appui axialement contre un épaulement cylindrique interne (126) dudit corps (102), lorsque le piston (106) est dans ladite première position, afin de définir précisément cette première position, le fluide étant destiné à s'écouler entre ces ergots (166) lorsque le piston (106) est dans ladite seconde position.

2. Vanne (100) selon la revendication 1, dans laquelle le corps tubulaire (102) est en matériau plastique et/ou la bague (104) est en matériau plastique ou en métal.

3. Vanne (100) selon la revendication 1 ou 2, dans laquelle la bague (104) est engagée dans ou sur le corps (102) par encliquetage élastique.

4. Vanne (100) selon la revendication 3, dans laquelle le corps (102) comprend à une extrémité axiale des encoches radiales (116) définissant entre elles des lèvres (118) élastiquement déformables en direction radiale, la bague (104) étant destinée à être au moins en partie entourée par ces lèvres (118).

5. Vanne (100) selon l'une des revendications précédentes, dans laquelle la surface cylindrique externe (102a) du corps (102) comprend au moins une nervure annulaire (110) d'ancrage dans ledit tuyau (12).

6. Vanne (100) selon l'une des revendications précédentes, dans laquelle la surface cylindrique externe (102a) du corps (102) comprend au moins une gorge annulaire externe (112), la vanne (100) comportant en outre au moins un second joint annulaire (114) monté dans cette gorge.

7. Vanne (100) selon l'une des revendications précédentes, dans laquelle ledit siège (124) est formé par une surface tronconique (130) située sur un côté dudit rebord (122) et/ou entre ce rebord (122) et ledit épaulement (126).

8. Vanne (100) selon l'une des revendications précédentes, dans laquelle lesdits doigts (158) sont situés à une périphérie externe dudit second côté et sont chacun reliés à une arête (160) en saillie sur ce second côté, ces arêtes (160) s'étendant radialement par rapport à l'axe A depuis les doigts (158) et se rejoignant au niveau de cet axe A.

9. Vanne (100) selon la revendication précédente, dans laquelle lesdites arêtes (160) sont reliées à une face radiale (144b) dudit second côté par des surfaces incurvées concaves (162) à profil aérodynamique.

10. Vanne (100) selon l'une des revendications précédentes, dans laquelle lesdites pattes (152) sont reliées à une base (154) en saillie sur ledit premier côté, cette base (154) étant configurée pour prendre appui axialement contre lesdits guides (140), lorsque le piston (106) est dans ladite seconde position, afin de définir précisément cette seconde position.

11. Vanne (100) selon l'une des revendications précédentes, dans laquelle le premier joint (146) est situé dans une gorge annulaire externe (148) de la tête (144) qui est formée dans une surface cylindrique externe (150) de la tête (144).

12. Vanne (100) selon l'une des revendications précédentes, dans laquelle lesdits ergots (166) sont en saillie sur un rebord annulaire externe (164) de la tête (144), et en particulier sur une surface annulaire de ce rebord qui a en section axiale une forme arrondie convexe.

13. Vanne (100) selon la revendication précédente, dans laquelle ledit rebord (164) a un diamètre maximal externe (G3) inférieur à un diamètre interne (Q2) dudit épaulement et lesdits ergots (166) ont des extrémités radiales externes qui sont situées sur une circonférence centrée sur l'axe A qui a un diamètre (G5) compris entre le diamètre interne (Q2) dudit épaulement (126) et son diamètre externe (Q3).

14. Tuyau (12) pour un circuit de fluide, en particulier automobile, comportant une vanne (100) selon l'une des revendications précédentes, qui est insérée dans :
- un tronçon (24) de ce tuyau (12), de préférence après déformation plastique de ce dernier afin d'en élargir son diamètre interne, ou
- un alésage (168) d'un bloc (170) fixé, par exemple par brasage ou soudage, à une extrémité du tuyau (12).

15. Véhicule, comportant au moins une vanne (100) selon l'une des revendications 1 à 13 ou un tuyau selon la revendication 14.

## Patentansprüche

1. Einsetzbares Rückschlagventil (100) für einen Fluidkreislauf, insbesondere eines Fahrzeugs, wobei dieses Ventil (100) konfiguriert ist, um in ein Rohr (12) eingesetzt zu werden und Folgendes umfasst:
- einen rohrförmigen Körper (102), der eine Hauptachse A aufweist und eine äußere zylindrische Fläche (102a) umfasst, die konfiguriert ist, um von einer inneren zylindrischen Fläche (24b1) des Rohrs (12) umgeben zu sein, wobei dieser Körper (102) einen inneren ringförmigen Rand (122) und einen inneren ringförmigen Sitz (124) umfasst,
- einen Ring (104), der zumindest teilweise im oder auf dem Körper (102) angebracht ist und Führungen (140) umfasst, die sich in Bezug auf die Achse A in radialer Richtung erstrecken,
- einen Kolben (106), der im Körper (102) angebracht ist und einen Kopf (144) umfasst, der eine erste ringförmige Abdichtungsverbindung (146) umfasst, die konfiguriert ist, um auf dem Sitz (124) aufzuliegen, wobei der Kolben (106) eine erste Seite umfasst, wobei der Kolben (106) weiter eine zweite, gegenüberliegende Seite umfasst, und
- ein elastisch verformbares Organ (108), das zwischen dem Kopf (144) und dem Ring (104) angebracht ist und konfiguriert ist, um die Verbindung (146) bei axialer Auflage auf dem Sitz (124) zu beanspruchen,
wobei der Kolben (106) ausgehend von einer Schließposition des Ventils (100), bei der die erste Verbindung (146) axial auf dem Sitz (124) aufliegt, bis zu einer Öffnungsposition des Ventils (100), bei der die erste Verbindung (146) axial vom Sitz (124) beabstandet ist, axial bewegbar ist, wobei diese Verschiebung dazu vorgesehen ist, durch ein Fluid ausgelöst zu werden, das dazu vorgesehen ist, eine Kraft auf die zweite Seite auszuüben, die größer ist als eine elastische Rückstellkraft, die von dem Organ (108) angelegt wird, wobei das Ventil **dadurch gekennzeichnet ist, dass** der Kolben (106) Laschen (152) umfasst, die sich ausgehend von der ersten Seite axial erstrecken und konfiguriert sind, um durch Gleiten mit den Führungen (140) zusammenzuwirken, wobei der Kolben (106) weiter Finger (158) umfasst, die sich ausgehend von der zweiten Seite axial erstrecken und konfiguriert sind, um durch Gleiten mit einem inneren Umfang des Rands (122) zusammenzuwirken, und dadurch, dass der Kopf (144) an seinem Außenumfang Zapfen (166) umfasst, die sich in Bezug auf die Achse (A) in radialer Richtung erstrecken und die konfiguriert sind, um axial auf einer inneren zylindrischen Schulter (126) des Körpers (102) aufzuliegen, wenn der Kolben (106) in der ersten Position ist, um genau diese erste Position zu definieren, wobei das Fluid dazu vorgesehen ist, zwischen diesen Zapfen (166) abzufließen, wenn der Kolben (106) in der zweiten Position ist.

2. Ventil (100) nach Anspruch 1, wobei der rohrförmige Körper (102) aus Kunststoffmaterial ist und/oder der Ring (104) aus Kunststoffmaterial oder aus Metall ist.

3. Ventil (100) nach Anspruch 1 oder 2, wobei der Ring (104) durch elastisches Einrasten in oder auf dem Körper (102) in Eingriff steht.

4. Ventil (100) nach Anspruch 3, wobei der Körper (102) an einem axialen Ende radiale Einkerbungen (116) umfasst, die untereinander in radialer Richtung elastisch verformbare Lippen (118) definieren, wobei der Ring (104) dazu vorgesehen ist, zumindest teilweise von diesen Lippen (118) umgeben zu sein.

5. Ventil (100) nach einem der vorstehenden Ansprüche, wobei die äußere zylindrische Fläche (102a) des Körpers (102) zumindest eine ringförmige Rippe (110) zur Verankerung im Rohr (12) umfasst.

6. Ventil (100) nach einem der vorstehenden Ansprüche, wobei die äußere zylindrische Fläche (102a) des Körpers (102) zumindest eine äußere ringförmige Nut (112) umfasst, wobei das Ventil (100) weiter zumindest eine zweite ringförmige Verbindung (114) umfasst, die in dieser Nut angebracht ist.

7. Ventil (100) nach einem der vorstehenden Ansprüche, wobei der Sitz (124) durch eine kegelstumpfförmige Fläche (130) gebildet ist, die sich auf einer Seite des Rands (122) und/oder zwischen diesem Rand (122) und der Schulter (126) befindet.

8. Ventil (100) nach einem der vorstehenden Ansprüche, wobei sich die Finger (158) an einem Außenumfang der zweiten Seite befinden und jeweils mit einer vorstehenden Kante (160) auf dieser zweiten Seite verbunden sind, wobei sich diese Kanten (160) in Bezug auf die Achse A ausgehend von den Fingern (158) radial erstrecken und an dieser Achse A zusammenlaufen.

9. Ventil (100) nach dem vorstehenden Anspruch, wobei die Kanten (160) durch konkave gekrümmte Flächen (162) mit aerodynamischem Profil mit einer radialen Fläche (144b) der zweiten Seiten verbunden sind.

10. Ventil (100) nach einem der vorstehenden Ansprüche, wobei die Laschen (152) mit einer vorstehenden Basis (154) auf der ersten Seite verbunden sind, wobei diese Basis (154) konfiguriert ist, um axial auf den Führungen (140) aufzuliegen, wenn der Kolben (106) in der zweiten Position ist, um genau diese zweite Position zu definieren.

11. Ventil (100) nach einem der vorstehenden Ansprüche, wobei sich die erste Verbindung (146) in einer äußeren ringförmigen Nut (148) des Kopfs (144) befindet, die in einer äußeren zylindrischen Fläche (150) des Kopfs (144) gebildet ist.

12. Ventil (100) nach einem der vorstehenden Ansprüche, wobei die Zapfen (166) auf einem äußeren ringförmigen Rand (164) des Kopfs (144) und insbesondere auf einer ringförmigen Fläche dieses Rands vorstehen, die im axialen Querschnitt eine konvexe gerundete Form aufweist.

13. Ventil (100) nach dem vorstehenden Anspruch, wobei der Rand (164) einen maximalen Außendurchmesser (G3) aufweist, der kleiner ist als ein Innendurchmesser (Q2) der Schulter und die Zapfen (166) äußere radiale Enden aufweisen, die sich auf einem auf der Achse A zentrierten Umfang befinden, der einen Durchmesser (G5) zwischen dem Innendurchmesser (Q2) der Schulter (126) und dessen Außendurchmesser (Q3) aufweist.

14. Rohr (12) für einen Fluidkreislauf, insbesondere für ein Automobilfahrzeug, umfassend mindestens ein Ventil (100) nach einem der vorstehenden Ansprüche, das eingesetzt ist in:
- einem Teilabschnitt (24) dieses Rohr (12), vorzugsweise nach plastischer Verformung dieses Letzteren, um seinen Innendurchmesser zu vergrößern, oder
- einer Bohrung (168) eines Blocks (170), der beispielsweise durch Löten oder Schweißen an einem Ende des Rohrs (12) befestigt ist.

15. Fahrzeug, umfassend zumindest ein Ventil (100) nach einem der Ansprüche 1 bis 13 oder ein Rohr nach Anspruch 14.

## Claims

1. A non-return insert valve (100) for a fluid circuit, in particular of a vehicle, this valve (100) being configured to be inserted into a pipe (12) and comprising:
- a tubular body (102) having a main axis A and comprising an external cylindrical surface (102a) configured to be surrounded by an internal cylindrical surface (24b1) of the pipe (12), this body (102) comprising an internal annular rim (122) and an internal annular seat (124),
- a ring (104) mounted at least partly in or on said body (102) and comprising guides (140) extending in a radial direction with respect to said axis A,
- a piston (106) mounted in said body (102) and comprising a head (144) carrying a first annular seal (146) configured to come to be supported on said seat (124), the piston (106) comprising a first side, the piston (106) further comprising a second opposite side, and
- an elastically deformable member (108) mounted between the head (144) and the ring (104) and configured to bias the seal (146) in axial support against said seat (124),
said piston (106) being axially movable from a closed position of the valve (100) in which the first seal (146) is in axial support on said seat (124), to an open position of the valve (100) in which the first seal (146) is at an axial distance from said seat (124), this displacement being intended to be caused by a fluid which is intended to apply a force on said second side which is greater than an elastic return force imposed by said member (108),
the vane being **characterized in that** the piston (106) comprises tabs (152) extending axially from the first side and configured to slidingly cooperate with said guides (140), the piston (106) further comprising fingers (158) extending axially from the second side and configured to slidably cooperate with an internal periphery of said rim (122),
and **in that** the head (144) comprises at its external periphery lugs (166) which extend in a radial direction with respect to said axis (A) and which are configured to be supported axially against an internal cylindrical shoulder (126) of said body (102), when the piston (106) is in said first position, in order to precisely define this first position, the fluid being intended to flow between these lugs (166) when the piston (106) is in said second position.

2. The valve (100) of claim 1, wherein the tubular body (102) is made of plastic material and/or the ring (104) is made of plastic material or metal.

3. The valve (100) according to claim 1 or 2, wherein the ring (104) is engaged in or on the body (102) by elastic snap-fit.

4. The valve (100) according to claim 3, wherein the body (102) comprises at an axial end radial notches (116) defining between them lips (118) elastically deformable in radial direction, the ring (104) being intended to be at least partly surrounded by these lips (118).

5. The valve (100) according to any of the preceding claims, wherein the external cylindrical surface (102a) of the body (102) comprises at least one annular rib (110) for anchoring in said pipe (12).

6. The valve (100) according to any of the preceding claims, wherein the external cylindrical surface (102a) of the body (102) comprises at least one external annular gorge (112), the valve (100) further comprising at least one second annular seal (114) mounted in this gorge.

7. The valve (100) according to any of the preceding claims, wherein said seat (124) is formed by a frustoconical surface (130) located on one side of said rim (122) and/or between this rim (122) and said shoulder (126).

8. The valve (100) according to any of the preceding claims, wherein said fingers (158) are located at an external periphery of said second side and are each connected to an edge (160) projecting from this second side, these edges (160) extending radially with respect to the axis A from the fingers (158) and meeting at the level of this axis A.

9. The valve (100) according to the preceding claim, wherein said edges (160) are connected to a radial face (144b) of said second side by concave curved surfaces (162) with aerodynamic profile.

10. The valve (100) according to one of the preceding claims, wherein said tabs (152) are connected to a base (154) projecting from said first side, this base (154) being configured to be supported axially against said guides (140), when the piston (106) is in said second position, in order to precisely define this second position.

11. The valve (100) according to any of the preceding claims, wherein the first seal (146) is located in an external annular gorge (148) of the head (144) which is formed in an external cylindrical surface (150) of the head (144).

12. The valve (100) according to one of the preceding claims, wherein said lugs (166) project from an external annular rim (164) of the head (144), and in particular from an annular surface of this rim which has a convex rounded shape in axial cross-section.

13. The valve (100) according to the preceding claim, wherein said rim (164) has a maximum external diameter (G3) less than an internal diameter (Q2) of said shoulder and said lugs (166) have radially external ends which are located on a circumference centred on the axis A which has a diameter (G5) between the internal diameter (Q2) of said shoulder (126) and its external diameter (Q3).

14. A pipe (12) for a fluid circuit, in particular a motor vehicle circuit, comprising a valve (100) according to one of the preceding claims, which is inserted in:
- a section (24) of this pipe (12), preferably after plastic deformation of the latter in order to enlarge its internal diameter, or
- a bore (168) of a block (170) attached, for example by brazing or welding, to one end of the pipe (12).

15. A vehicle, comprising at least one valve (100) according to one of claims 1 to 13 or a pipe according to claim 14.
